Europäisches Patentamt

European Patent Office

Office européen des brevets

(19)

(11) Publication number: **0 028 855**

**B1**

(12) **EUROPEAN PATENT SPECIFICATION**

(45) Date of publication of patent specification: **12.09.84**

(51) Int. Cl.³: **G 01 N 29/04**

(21) Application number: **80201028.0**

(22) Date of filing: **30.10.80**

(54) Method and apparatus for ultrasonic non-destructive testing of a metal workpiece.

(30) Priority: **08.11.79 NL 7908205**

(43) Date of publication of application:
**20.05.81 Bulletin 81/20**

(45) Publication of the grant of the patent:
**12.09.84 Bulletin 84/37**

(84) Designated Contracting States:
**AT BE DE FR GB IT LU SE**

(56) References cited:
**GB-A- 951 277**
**GB-A-1 199 177**
**GB-A-1 425 201**
**GB-A-2 045 932**
**US-A-3 295 362**
**US-A-3 969 926**

(73) Proprietor: **HOOGOVENS GROEP B.V.**
**P.O. Box 10.000**
**NL-1970 CA IJmuiden (NL)**

(72) Inventor: **Ploegaert, Hendrikus Theophiel**
**Willem de Zwijgerlaan 88**
**NL-1901 CA Castricum (NL)**

(74) Representative: **van Buytene, Arie Jacobus et al**
**p/a Hoogovens Groep B.V. P.O.Box 10.000**
**NL-1970 CA IJmuiden (NL)**

Courier Press, Leamington Spa, England.

## Description

The invention relates to a method and apparatus for ultrasonic non-destructive testing of metal workpieces, in particular using an electromagnetic acoustic converter having a hf transmitter/receiving coil and a magnet, which converter magnet can be moved directly above the surface of a workpiece being investigated.

A method and apparatus of the above general kind are described in "Material-Prüfung", volume 20 (1978) No. 2, pages 62 to 67.

In "contact free" ultrasonic testing of this kind, wherein ultrasonic excitation is achieved through an electro-dynamic conversion process, the output signal amplitude level is highly dependent on the distance between the hf coil and the surface of the workpiece being tested. See Fig. 7b in the article mentioned above.

As shown in Fig. 4 in the said article, the converter is mounted on a trolley which can be rolled over the surface of the workpiece being tested. If this surface undulates or is curved, there is no guarantee that this distance will remain constant.

If the hf coil is more remote from the workpiece surface, the ultrasonic vibration excited in the workpiece is less, so that the signals received by the coil are smaller and their automatic processing is jeopardized.

The object of the invention is to provide a method and apparatus for ultrasonic non-destructive testing of metal workpieces wherein this problem does not arise. In particular the invention proposes that variation in the spacing of the coil from the workpiece is compensated by electronic means.

So the invention relates to a method of ultrasonic non-destructive testing of a metal workpiece in which an electromagnetic acoustic converter comprising a hf transmitting/receiving coil and a magnet is moved so that the coil and magnet are adjacent a surface of the workpiece while hf pulses are fed to the coil and signals induced in the coil by the workpiece are amplified by at least one amplifier, which method according to the invention is characterized in that during testing, the amplification factor of the said at least one amplifier is controlled in dependence on the electromagnetic coupling factor between the workpiece and the said electromagnetic acoustic converter, such that the amplification factor is increased when the coupling factor decreases and vice versa.

The said coupling factor may be then the electromagnetic coupling factor between the said hf transmitting/receiving coil and the workpiece.

To use the electromagnetic coupling between the workpiece and the hf coil in order to control the amplification factor of an amplifier in the receiver, can be achieved most simply if the transmission voltage across the coil when transmitting is used as a measure of the coupling factor.

Other values that can be used for coupling factor are (i) the transmission current through the coil, (ii) the transmission power, (ii) the phase displacement between transmission voltage and transmission current, and (iv) the impedance variation of the transmitting/receiving coil.

A separate coil may be used, the impedance changes of which are taken as a measure of the coupling factor. A separate coil of this kind can for example be actuated continuously by an hf signal at a fixed frequency which is filtered out of the signal received.

Another alternative is for the transmission coil to be briefly connected to a separate hf source immediately before actual transmitting/receiving step. The separate source can be used to determine the coupling factor in one of the ways mentioned above.

The invention also relates to an apparatus for ultrasonic nondestructive testing of a metal workpiece, comprising an electromagnetic acoustic converter adapted to be moved adjacent a surface of the workpiece and having a hf transmitting/receiving coil and a magnet means for feeding hf pulses to the said coil and at least one amplifier arranged to amplify signals induced in the coil by the workpiece as a result of the electromagnetic coupling of the coil and the workpiece, which apparatus according to the invention is characterized by:

means for sensing variation of the electromagnetic coupling factor of the coil and workpiece and for controlling the amplification factor of the said amplifier, such that the amplification factor is increased when the coupling factor decreases and vice versa.

Further features of this apparatus will become clear from the sub-claims 9 to 12.

One of the various advantages of the invention is that the visual assessment of the output as a video signal on a display screen is facilitated and that automatic processing of the measured results is improved.

It should be mentioned that it is known, in arrangements where the ultrasonic transducer is remote from the workpiece and the workpiece is contacted by a probe, to detect variations of the acoustic coupling of the probe and the workpiece and to use such variations to control sensitivity (see GB patents specifications nos. 951277 and 1199177). The present invention differs fundamentally in using the electromagnetic coupling factor between the coil itself and the workpiece.

The preferred embodiment of the invention is described below by way of example and with reference to the drawings in which:—

Fig. 1 shows a known electromagnetic acoustic converter to which the invention can be applied, and

Figs. 2a, 2b and 2c are respective diagrammatic views of a transmitter/receiver apparatus embodying the present invention.

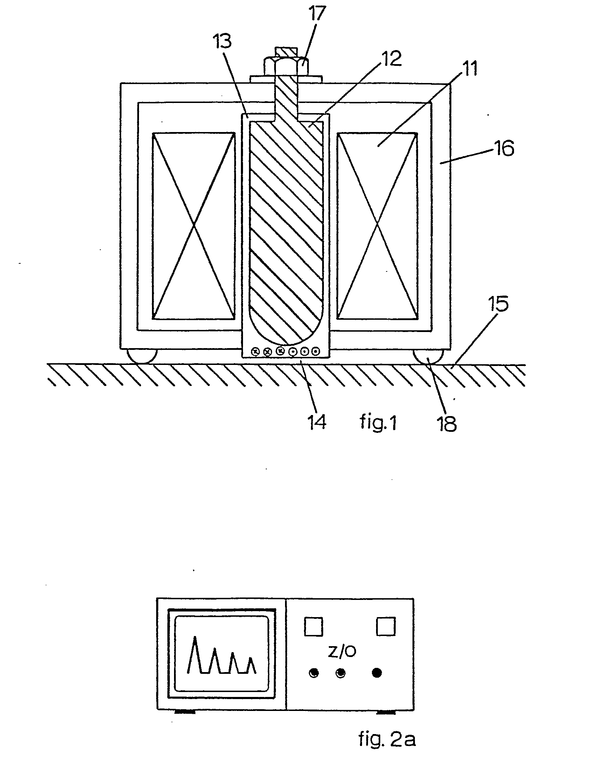

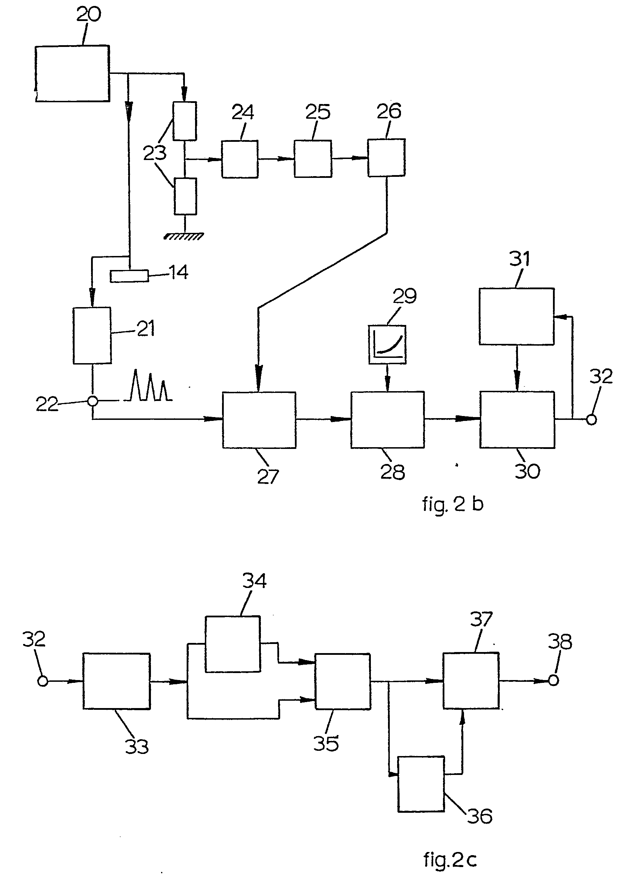

In Fig. 1, the electromagnetic acoustic converter consists of a magnetic coil 11 with magnetic core 12 having a hemispherical end and an hf transmitting/receiving coil 14, both encapsulated in a cover 13, e.g. of suitable plastics material. The coil 14 is fitted against the hemispherical end of the magnetic core 12 and therefore lies between this end and the surface 15 of a workpiece being tested. With use of this known form of converter (see for example German Patent Specification No. 26 21 684, Fig. 2), transverse ultrasonic vibration arises in the workpiece material.

A screen 16, for example of aluminium e.g. 4 mm thick, may be fitted round the actuating coil 11 to protect the magnet 12 and to remove heat dissipated in the coil 11. The screen 16 may be provided with cooling fins.

With a converter of this kind, the distance between the coil 14 and the surface 15 should be approximately 0.5 to 1 mm. The converter is moved over the surface 15 of the workpiece on rollers 18, and a nut 17 on a threaded shank is provided to adjust the spacing of the coil from the workpiece. Nevertheless the distance between the coil 14 and the surface 15 may vary. These variations mean that the air gap and consequently the electromagnetic coupling between the coil and the workpiece is not constant. The echo signal received or induced in the coil by the workpiece therefore varies in amplitude, which complicates its reading. As the spacing of the coil from the surface increases, the coil 14 transmits less energy to the workpiece 15 so that the level of ultrasonic vibration excited in the workpiece is lower. Consequently, the transmitter is less heavily loaded and the transmission voltage is higher. The present invention is based on the recognition that the coupling factor with the workpiece can be used to regulate the amplification of the receiver amplifier for the echo signals, as now described in more detail.

The simplest method for determining the coupling factor is to measure the transmission voltage, or a voltage proportional thereto, and to control the amplification factor of the receiving amplifier in dependence on the transmission voltage and thus in dependence on the loading of the transmitter. There are, of course, other ways of measuring the coupling factor or the transmitter load e.g. by measuring the impedance of the transmission coil 14.

For example in the circuit described further below, the transmission pulses applied to the coil have an initial negative peak of about 400 volts. The absolute value of this depends on the coil 14 and on the electromagnetic coupling factor between the coil 14 and the workpiece. The second peak, which is positive, is still about 250 volts. The transmission pulse than damps out further. The frequency of the pulse wave is 1, 2 1/4, 5 ot 10 MHz and the repetition frequency of the pulses is 80 to 2500 per second.

Reflected echoes are obtained from the bottom of the workpiece, the second echo having a lower intensity than the first. The echo signals induced in the coil 14 by the workpiece are filtered and amplified and shown on a screen. The signal displayed is sometimes called the "video signal".

The size of the echo (a) depends on the magnetic coupling between the converter and the workpiece and (b) is inversely proportional to the distance travelled by the acoustic vibration in the workpiece. The echo signal is therefore greater with a thin workpiece. The time delay before each echo is equal to the distance travelled in the workpiece divided by the speed of the transverse waves, this being about 3000 metres per second in steel. For the first echo the distance travelled is of course twice the thickness of the article being examined.

The transmitter/receiver device embodying the invention with its associated screen for display of the video signal is shown in diagram form in Fig. 2a, while Figs. 2b and 2c show it partially in block diagram form.

The transmitter source 20 transmits the high frequency pulses to the hf coil 14 at a specific repeat frequency. The echo signals received from the workpiece by the coil 14 are conducted to the first receiving amplifier 21 and appear at its output 22. A first voltage-controlled amplifier 27 is linked to this output 22. The transmitter output signal is conducted via a voltage divider 23 to a comparator 24, which compares the output voltage with manually preset values, a memory 25 which stores the signal level and thus stores the degree of coupling between the coil 14 and the workpiece and a digital-analog converter 26, which converts the digital information into an analog signal. The output of the converter 26 serves as the control voltage for the amplifier 27. This circuit is driven synchronously on each transmission pulse.

The variation in the transmission voltage resulting from the varying coupling factor between the coil and the workpiece and thus from the varying spacing between the coil and the workpiece is therefore used to adjust the amplification factor of the voltage-controlled amplifier 27 which amplifies the echo signals accordingly.

A second voltage-controlled amplifier 28 is provided and this has an amplification factor which increases with elapse of time from the initial transmission pulse. This amplification factor is derived from the time compensator 29. The amplifier 28 thus continuously increased the amplification of the successive diminishing echo signals. In this way, all echo signals can be brought up to a virtually uniform amplitude. This circuit 28, 29 of course, is also synchronized with the transmission pulses.

Despite these two amplitude compensations, there will still be some fluctuation in the amplitude as a result of the non-linearities of the circuits, the properties of the workpiece material and the quality and thickness of the workpiece. The output signal from amplifier 28 is therefore conveyed to a voltage-controlled amplifier 30 which produces a constant output amplitude through an automatic gain control (AGC) 31, irrespective of the input amplitude. The output voltage of this circuit 30, 31 appears at a terminal 32.

In order to obtain an impression of errors which may arise, and possibly, to correlate the signal with itself, use is made of the further circuit shown in Fig. 2c. After the output signal at terminal 32 has been converted to digital form with the aid of an adjustable comparator 33, it is delayed in a shift register 34 and combined with the next following signal using NAND gates. In this way, noise and voltage peaks can be inhibited and a cleaner output signal will be obtained. This combination is sometimes known as a semi-digital filter 35.

The signal correlated in this way is then offered to a comparator circuit 37, which performs right/wrong assessment based on a large number (minimum 10) of earlier measured signals stored in memory circuit 36. The circuits also run synchronously with the transmission pulse. A right/wrong detector may be connected to an alarm at output terminal 38.

Each voltage form behind the various amplifiers 21, 27, 28, 30 and the circuits 33 and 35 can in principle be displayed on the screen.

The electrical compensation of fluctuations in the distance between the transmission/receiving coil 14 and the surface 15 of the workpiece being tested can in principle also be applied to electromagnetic acoustic exciters of other types than those shown in Fig. 1. Such exciters may include those for longitudinal vibration, angle probes and plate wave or "lamb wave" probes, as known in this field.

## Claims

1. Method of ultrasonic non-destructive testing of a metal workpiece in which an electromagnetic acoustic converter comprising a hf transmitting/receiving coil (14) and a magnet (11) is moved so that the coil and magnet are adjacent a surface of the workpiece (15) while hf pulses are fed to the coil and signals induced in the coil by the workpiece are amplified by at least one amplifier (27), characterized in that: during testing, the amplification factor of the said at least one amplifier (27) is controlled in dependence on the electromagnetic coupling factor between the workpiece and the said electromagnetic acoustic converter, such that the amplification factor is increased when the coupling factor decreases and vice versa.

2. Method according to claim 1 wherein the said coupling factor is the electromagnetic coupling factor between the said hf transmitting/receiving coil (14) and the workpiece.

3. Method according to claim 2 wherein one of the following is taken as a measure of the said coupling factor:

a) the transmission voltage across the hf transmitting/receiving coil (14),

b) the transmission current through the hf transmitting/receiving coil,

c) the transmission power,

d) the phase displacement between the transmission voltage and the transmission current, and

e) the impedance of the hf transmitting/receiving coil.

4. Method according to claim 3 wherein the transmission voltage across the hf transmitting/receiving coil is taken as a measure of the said coupling factor.

5. Method according to claim 3 wherein the impedance of the hf transmitting/receiving coil is taken as a measure of the said coupling factor and, immediately before a pulse transmission by the coil, the coil is briefly connected to means adapted to measure its impedance.

6. Method according to claim 1 wherein the said coupling factor is the electromagnetic coupling factor between the workpiece and a further coil, separate from the said hf transmitting/receiving coil (14), the impedance of the said further coil being taken as a measure of the coupling factor.

7. Method according to claim 6 wherein during testing the said further coil is actuated continuously by an hf signal which is filtered out of the signal received by the transmitting/receiving coil (14).

8. Apparatus for ultrasonic non-destructive testing of a metal workpiece, comprising an electromagnetic acoustic converter adapted to be moved adjacent a surface of the workpiece and having a hf transmitting/receiving coil (14) and a magnet (11), means (20) for feeding hf pulses to the said coil (14) and at least one amplifier (27) arranged to amplify signals induced in the coil (14) by the workpiece as a result of the electromagnetic coupling of the coil (14) and the workpiece, characterized by: means (23, 24, 25, 26) for sensing variation of the electromagnetic coupling factor of the coil and workpiece and for controlling the amplification factor of the said amplifier (27), such that the amplification factor is increased when the coupling factor decreases and vice versa.

9. Apparatus according to claim 8 wherein the variation sensing means (23, 24, 25, 26) is arranged to monitor the output voltage of the said hf pulse-feeding means (20).

10. Apparatus according to claim 9 wherein said variation-sensing means (23, 24, 25, 26) comprises a voltage divider (23) which received the output voltage of said hf pulse-feeding means (20) and a rapid comparator circuit (24) to which the output of the voltage divider (23) is fed, the said amplifier (27) being voltage-controlled and its amplification factor being regulated in accordance with the voltage variation detected by the comparator circuit (24).

11. Apparatus according to claim 10 having a semi-digital filter or correlator (35) to which the output of the amplifier (27) is fed.

12. Apparatus according to claim 11 having a comparator circuit (37) for right/wrong assessment, to which is fed the output of the said semi-digital filter or correlator (35), the said comparator circuit (37) operating on the basis of earlier measured signals stored in a memory circuit (36).

## Revendications

1. Procédé pour le contrôle non destructif par ultrasons d'une pièce métallique, dans lequel un convertisseur électromagnétique-acoustique comprenant un bobinage émetteur-récepteur haute fréquence (14) et un aimant (11) se déplace de telle manière que le bobinage et l'aimant sont proches d'une surface de la pièce (15) pendant que des impulsions haute fréquence sont envoyées dans le bobinage et que les signaux induits dans le bobinage par la pièce sont amplifiés par un amplificateur (27) au moins, ce procédé étant caractérisé en ce que:
pendant le contrôle, le facteur d'amplification de cet amplificateur (27) au moins est réglé en relation avec le facteur de couplage électromagnétique de la pièce et du convertisseur électromagnétique-acoustique, de telle sorte que le facteur d'amplification augmente lorsque le facteur de couplage diminue et inversement.

2. Procédé suivant la revendication 1, dans lequel le facteur de couplage est le facteur de couplage électromagnétique du bobinage émetteur-récepteur haute fréquence (14) et de la pièce.

3. Procédé suivant la revendication 2, dans lequel l'une des valeurs suivantes est considérée comme une mesure du facteur de couplage:
a) la tension d'émission aux bornes du bobinage émetteur-récepteur haute fréquence (14),
b) le courant d'émission passant dans le bobinage émetteur-récepteur haute fréquence,
c) la puissance d'émission,
d) le déphasage entre la tension d'émission et le courant d'émission, et
e) l'impédance du bobinage émetteur-récepteur haute fréquence.

4. Procédé suivant la revendication 3, dans lequel la tension d'émission aux bornes du bobinage émetteur-récepteur haute fréquence est considérée comme une mesure du facteur de couplage.

5. Procédé suivant la revendication 3, dans lequel l'impédance du bobinage émetteur-récepteur haute fréquence est considérée comme une mesure du facteur de couplage et, immédiatement avant l'émission d'impulsions par le bobinage, celui-ci est connecté brièvement aux moyens prévus pour mesurer son impédance.

6. Procédé suivant la revendication 1, dans lequel le facteur de couplage est le facteur de couplage électromagnétique de la pièce et d'un bobinage supplémentaire, séparé du bobinage émetteur-récepteur haute fréquence (14), l'impédance de ce bobinage supplémentaire étant considérée comme une mesure du facteur de couplage.

7. Procédé suivant la revendication 6, dans lequel pendant le contrôle, ce bobinage supplémentaire est excité de manière continue par un signal haute fréquence qui est séparé par filtrage du signal reçu par le bobinage émetteur-récepteur (14).

8. Appareil pour le contrôle non destructif par ultrasons d'une pièce métallique, comprenant un convertisseur électromagnétique-acoustique prévu pour se déplacer au voisinage d'une surface de la pièce et comportant un bobinage émetteur-récepteur haute fréquence (14) et un aimant (11), un moyen (20) pour envoyer des impulsions haute fréquence au bobinage (14) et au moins un amplificateur (27) prévu pour amplifier les signaux induits dans le bobinage (14) par la pièce en raison du couplage électromagnétique du bobinage (14) et de la pièce, cet appareil étant caractérisé par:
des moyens (23, 24, 25, 26) pour détecter la variation du facteur de couplage électromagnétique de bobinage et de la pièce, et pour régler le facteur d'amplification de l'amplificateur (27), de telle sorte que ce facteur d'amplification augmente lorsque le facteur de couplage diminue et inversement.

9. Appareil suivant la revendication 8, dans lequel les moyens (23, 24, 25, 26) de detection de la variation sont prévus pour contrôler la tension de sortie du moyen (20) pour envoyer les impulsions haute fréquence.

10. Appareil suivant la revendication 9, dans lequel les moyens (23, 24, 25, 26) pour détecter la variation comprennent un diviseur (23) de tension qui reçoit la tension de sortie du moyen (20) pour envoyer les impulsions haute fréquence, et un circuit 24 de comparaison rapide auquel est envoyée la sortie du diviseur (23) de tension, l'amplificateur (27) étant à régulation de tension et son facteur d'amplification étant réglé conformément à la variation de tension détectée par le circuit (24).

11. Appareil suivant la revendication 10, comprenant un filtre semi-numérique ou circuit de corrélation (35) auquel est envoyée la sortie de l'amplificateur (27).

12. Appareil suivant la revendication 11, comprenant un circuit (37) de comparaison pour effectuer une évaluation des signaux vrais/erronés et auquel est envoyée la sortie du filtre semi-numérique ou circuit de corrélation (35), le fonctionnement de ce circuit (37) de comparaison étant basé sur des signaux mesurés précédemment et stockés dans le circuit (36) de mémoire.

**Patentansprüche**

1. Verfahren zum ultraschallzerstörungsfreien Prüfen eines metallischen Werkstückes, bei welchem ein elektromagnetischer Schallwandler, der eine HF-Sendeempfangsspule (14) und einen Magneten (1) enthält, derart bewegt wird, daß sich die Spule und der Magnet einer Oberfläche des Werkstückes (15) benachbart befinden, während der Spule HF-Impulse zugeführt und durch das Werkstück in der Spule induzierte Signale durch mindestens einen Verstärker (27) verstärkt werden, dadurch gekennzeichnet, daß während des Prüfens der Verstärkungsfaktor des genannten mindestens einen Verstärkers (27) in Abhängigkeit von dem elektromagnetischen Kopplungsfaktor zwischen dem Werkstück und dem genannten elektromagnetischen Schallwandler derart geregelt wird, daß der Verstärkungsfaktor erhöht wird, wenn der Kopplungsfaktor sinkt, und umgekehrt.

2. Verfahren anch Anspruch 1, bei welchem der genannte Kopplungsfaktor der elektromagnetische Kopplungsfaktor zwischen der HF-Sendeempfangsspule (14) und dem Werkstück ist.

3. Verfahren nach Anspruch 2, bei welchem eines der folgenden als ein Maß für den genannten Kopplungsfaktor verwendet wird:

a) die Übertragungsspannung quer über die HF-Sendeempfangsspule (14),

b) der Übertragungsstrom durch die HF-Sendeempfangsspule,

c) die Übertragungsleistung,

d) die Phasenverschiebung zwischen der Übertragungspannung und dem Übertragungsstrom, und

e) die Impedanz der Hf-Seneempfangsspule.

4. Verfahren nach Anspruch 3, bei welchem die Übertragungsspannung quer durch die HF-Sendeempfangsspule als Maß für den Kopplungsfaktor verwendet wird.

5. Verfahren nach Anspruch 3, bei welchem die Impedanz der HF-Sendeempfangsspule unmittelbar vor einer Impulsübertragung durch die Spule als ein Maß für den genannten Kopplungsfaktor verwendet wird, wobei die Spule kurz an eine für die Messung ihrer Impedanz geeignete Einrichtung angeschlossen wird.

6. Verfahren nach Anspruch 1, bei welchem der genannte Kopplungsfaktor der ektromagnetische Kopplungsfaktor zwischen dem Werkstück und einer weiteren, von der genannten HF-Sendeempfangsspule (14) getrennten Spule ist, wobei die Impedanz der genannten weiteren Spule als ein Maß für den Kopplungsfaktor verwendet wird.

7. Verfahren nach Anspruch 6, bei welchem während des Prüfens die genannte weitere Spule kontinuierlich durch ein HF-Signal betätigt wird, das aus dem von der Sendeempffangsspule (14) empfangenen Signal ausgefiltert wird.

8. Apparat zum ultraschallstörungsfreien Prüfen eines metallischen Werkstückes, mit einem elektromagnetischen Schallwandler, der geeignet ist, einer Oberfläche des Werkstückes benachbart bewegt zu werden, und der eine HF-Sendeempfangsspule (14) und einen Magneten (11), eine Einrichtung (20) zur Zufuhr von HF-Impulsen zu der genannten Spule (14) und mindestens einen Verstärker (27) zum Verstärken von als Resultat der elektromagnetischen Kopplung der Spule (14) und des Werkstückes von dem Werkstück in der Spule (14) induzierten Signalen, gekennzeichnet durch eine Einrichtung (23, 24, 25, 26) zum Abfühlen einer Änderung des elektromagnetischen Kopplungsfaktors der Spule und des Werkstückes und zum Regeln des Verstärkungsfaktors des genannten Verstärkers (27) derart, daß der Verstärkungsfaktor erhöht wird, wenn der Kopplungsfaktor sinkt, und umgekehrt.

9. Apparat nach Anspruch 8, bei welchem durch die Änderungsabfühleinrichtung (23, 24, 25, 26) die Ausgangsspannung der HF-Impuls-Zufuhreinrichtung (20) überwachbar ist.

10. Apparat nach Anspruch 9, bei welchem die genannte Änderungsabfühleinrichtung (23, 24, 25, 26) einen Spannungsteiler (23), der die Ausgangsspannung der HF-Impuls-Zufuhreinrichtung (20) erhält, und eine Schnell-Vergleichsschaltung (24) enthält, der das Ausgangssignal des Spannungsteilers (23) zugeführt ist, wobei der Verstärker (27) spannungsgeregelt ist und sein Verstärkungsfaktor entsprechend der von der Vergleichsschaltung (24) festgestellten Spannungsänderung geregelt wird.

11. Apparat nach Anspruch 10, mit einem semi-digitalen Filter oder Korrelator (35), dem das Ausgangssignal des Verstärkers (27) zugeführt ist.

12. Apparat nach Anspruch 11, mit einer Vergleichsschaltung (37) mit Richtig/Falsch-Wertung, welcher das Ausgangssignal des semi-digitalen Filters oder Korrelators (35) zugeführt ist, wobei die Vergleichsschaltung (37) auf der Grundlage früher gemessener und in einer Speicherschaltung (36) gespeicherter Signale arbeitet.

fig. 1

fig. 2a

1

fig. 2 b

fig.2c